# EUROPEAN PATENT SPECIFICATION

(11) **EP 2 814 299 B1**
(45) Date of publication and mention of the grant of the patent: **16.09.2020**
(21) Application number: 13171881.9
(22) Date of filing: 13.06.2013
(51) Int. Cl.: H04W 84/20

(54) **Method for organizing a wireless network**
Verfahren zum Organisieren eines drahtlosen Netzwerkes
Procédé d'organisation d'un réseau sans fil

(43) Date of publication of application: 17.12.2014
(73) Proprietor: Fraunhofer-Gesellschaft zur Förderung der angewandten Forschung e.V., 80686 München (DE)
(72) Inventor: Al-Akkad, Amro, 53225 Bonn (DE); Ramirez, Leonardo, 10713 Berlin (DE); Zimmermann, Andreas, 53225 Bonn (DE)
(74) Representative: Stöckeler, Ferdinand

(56) References cited:
- US-A1- 2010 254 361
- US-A1- 2010 272 083

## Description

The present invention in directed to a method and an apparatus for organizing a wireless network.

Current methods for the creation of ad hoc Peer to Peer (P2P) Transmission Control Protocol/Internet Protocol (TCP/IP) networks always require for people to first establish manually some sort of basic Wi-Fi infrastructure that usually demands a complex configuration process that might be cumbersome or completely unknown for the user. This often hinders or completely stops people from using such networks. Preserving an ad hoc Wi-Fi network when people leave and re-enter the coverage range of the Wi-Fi network creates a problem, because it requires for people to reconfigure and rejoin the network before using the services built on top of it, wherein this process can be cumbersome. The case is often that in a context, two or more ad hoc networks are created. Merging these networks to provide a common ground for services is problematic and requires a manual process of reconfiguration from users.

An existing method Wi-Fi-Opp enables the creation of spontaneous Mobile Ad Hoc Networks (MANETs) utilizing existing Wi-Fi® features inherent in current smartphone technology. Wi-Fi-Opp presents a lightweight approach for establishing a MANET and joining one. Its technology runs on stock Android phones, i.e. there is no need for jail breaking or rooting the device. Wi-Fi-Opp offers different modes for the creation of MANETs from static to flexible strategies for the development of an access point. A swap of roles is done in Wi-Fi-Opp by defining a time after which an access point is enabled to swap into a client mode, the swapping resulting in a randomly or manually establishing of a new access point.

US2010/272083 describes a wireless communication device configured to perform a master-switch in case a new peer enters the network.

It is the object of the invention to provide a method for organizing a wireless network, which allows reconfiguration of a network structure in an improved manner.

This object is achieved by a method according to claim 1 and an apparatus according to claim 12.

Aspects provide a method for re-organizing a wireless network having a first and a second peer configured to operate in a HUB mode or in a client mode, the method comprising:
broadcasting a network identifier by the first peer to establish the wireless network in which the first peer operates in the HUB mode and the second peer operates in the client mode;
establishing a network connection between the first and the second peer by processing a handshake procedure configured to exchange information between the first and the second peer;
receiving connectivity parameters of the second peer operating in the client mode by the first peer operating in the HUB mode; and
making of a positive or negative role swap decision by the first peer dependent on the received connectivity parameters;
characterized in that the first peer re-organizes the network such that a number of peers of the network after re-organization thereof is the same as the number of peers prior to the re-organization.

A recognition of the invention consists in having detected that a swapping of operating modes based on a decision which is based on at least one parameter of the second peer enables a wireless network to operate in an optimal operating mode with an optimized distribution of access points or energy consumption. The parameter may comprise an actual status or actual conditions of a peer, e.g. a connectivity parameter, for example a state of charge of a battery configured to supply the peer, or number of other peers recognized by the peer within a transmission range of the peer, or number of peers connected to a peer operating in the HUB mode, or an arbitrary information provided by an application running on the peer or an user of the peer. Thus, the parameter provide information about capabilities of the second peer with respect to participate in or to maintain a wireless network.

An advantage of the aspect is that by swapping operating modes and therefore roles in the wireless network, based on the at least one parameter which provides information about the actual conditions, the actual conditions are considered for organizing or reorganizing the wireless network which is therefore adapted actual conditions. For example, the actual conditions and therefore the at least one parameter comprises a number of peers within a transmission range of a particular peer so that amongst a plurality of peers a peer comprising a highest number of peers within transmission range is swapped to operate in the HUB mode, which results in minimizing the number of peers operating in the HUB mode and therefore minimizing the overall energy consumption of the wireless network.

Alternatively or in addition, the actual conditions and therefore the at least one parameter can comprise a status of the battery configured to supply the peer, so that the peer with high energy resources operates in the HUB mode, a peer with low energy resources operating in the client mode to save energy and to stay operational within the wireless network for a longer duration. The inventive method therefore is configured to preserve devices from running out of battery by considering at least one parameter upfront establishing a temporarily fixed connection. Furthermore, the at least one parameters may comprise further information about the particular peer, for example a smartphone model, CPU model, International Mobile Equipment Identity (IMEI), mobile operator or data rate. In addition, a selection of at least one parameter to be used for making the role swap decision may depend on a defined specific protocol to be used for a specific application.

Alternatively or in addition, the actual conditions and therefore the at least one parameter can comprise an arbitrary input provided by an application running on an apparatus forming the particular peer or a user of the particular peer. Altogether, the at least one parameter may comprise any technical, e.g. the battery status, or non-technical information, e.g. an user command, related to the particular peer.

The at least one parameter to be considered for making the role swap decision may comprise further information about the particular peer, for example a smartphone model, CPU model, IMEI, mobile operator or data rate, as stated before. For example, a smartphone model may comprise a consideration of capabilities of connecting a number of peers depending from the smartphone model. A consideration of time in terms of CPU models may comprise different speeds for processing messages of peers operating in the HUB mode. A consideration of the IMEI may comprise a prioritization of peers for operating in HUB mode, e.g. by adding the IMEI to a priority list. A consideration of a mobile operator may comprise a consideration of information about a local quality of a wireless service, e.g. it may be considered that defined mobile phone networks operated by defined mobile operators comprise a defined local quality of the mobile phone network at defined locations and therefore the defined mobile operators are prioritized at the defined locations. A consideration of the data rate may comprise the consideration of an amount of data which can be down- or uploaded by the wireless interface of the particular peer.

According to an aspect, in an initial state a first peer operates in a HUB mode and a second peer operates in a client mode. In a second step the first peer and the second peer establish a network connection via a handshake procedure. In a third step the first and the second peer are connected. In a fourth step the first and the second peer use a network connection between both the first and the second peer, wherein both peers have swapped roles so that the first peer operates the client mode and the second peer operates the HUB mode.

An advantage of the aspect is that the method can be realized by executing a network protocol while using existing hardware and thereby in a cost effective way of realization.

A further aspect comprises an apparatus configured to operate in a client mode as a client or a HUB mode as a HUB of a network. The apparatus is further configured to send and receive the at least one parameter and to derive a positive or negative role swap decision dependent from the received at least one parameters. The apparatus performs re-organization of the wireless network such that a number of peers (12a-e) of the network after re-organization thereof is the same as the number of peers (12a-e) prior to the re-organization.

The apparatus is therefore able to dynamically swap roles within a network and therefore supports a dynamically reorganization of the network to obtain an optimal network structure with respect to energy consumption and the numbers of HUBs, the designation of suitable HUBs without requiring cumbersome manual actions.

Preferred aspects of the present invention are described herein making reference to the appended drawings.

Equal or equivalent elements or elements with equal or equivalent functionality are denoted in the following description by equal or equivalent reference numerals.

In the following description, a plurality of details are set forth to provide a more thorough explanation of embodiments of the present invention. However, it will be apparent to those skilled in the art that embodiments of the present invention may be practiced without these specific details. In other instances, well-known structures and devices are shown in block diagram form rather than in detail in order to avoid obscuring embodiments of the present invention. In addition, features of the different embodiments described hereinafter may be combined with each other, unless specifically noted otherwise.
- Fig. 1: shows a diagram with the process of swapping roles of peers within a network, wherein in Fig. 1a a first and a second peer are unable to detect each other, wherein in Fig. 1b a third peer bridges the lack of range, connects to the second peer and swaps roles, wherein in Fig. 1c the third peer connects to the first peer and wherein in Fig. 1d the final state is shown;
- Fig. 2: shows a flowchart depicting different states of a peer;
- Fig. 3: shows a sequence diagram of the handshake procedure;
- Fig. 4: shows a procedure of creating a network according to a method, wherein in Fig. 4a shows a first peer in a HUB mode and a second peer in a client mode, Fig. 4b shows a building up of a connection between the peers, Fig. 4c shows the first and the second peer being connected and Fig. 4d shows the first and the second peer with swapped roles;
- Fig. 5: shows a flowchart of steps comprised by the HUB mode;
- Fig. 6: shows a flowchart of steps comprised by the client mode;
- Fig. 7: shows a diagram of a network with one peer in HUB mode and four peers in client mode, wherein one peer in client mode gets disrupted;
- Fig. 8a: shows a diagram with two networks formed by two peers each and a peer between both networks;
- Fig. 8b: shows a diagram of the peers and networks of Fig. 8a merged to one network with five peers;
- Fig. 9a: shows a diagram of the network of Fig. 8b, where a peer in HUB mode gets disrupted;
- Fig. 9b: shows a diagram of two networks formed by two peers each, after a re-organization of the network structure caused by the disruption of a peer in HUB mode;
- Fig. 10: shows a smartphone programmed to operate in a client mode as a client or in a HUB mode as a HUB of a network.

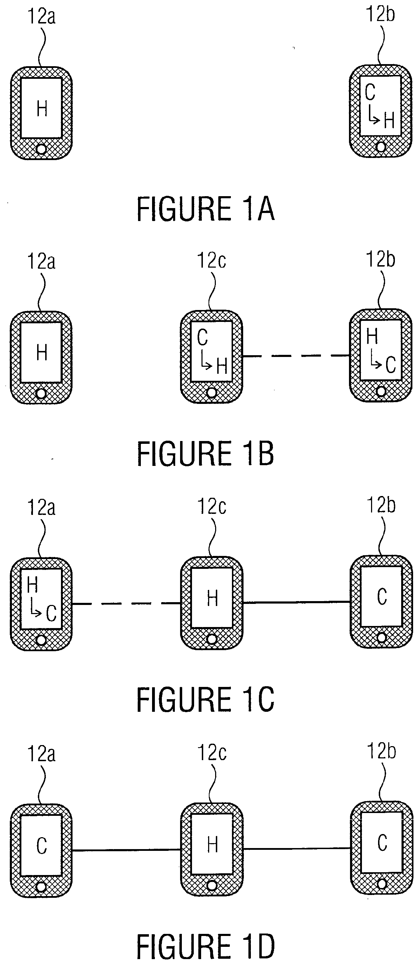

Fig. 1 shows a diagram with the process of swapping roles of peers within a network.

Fig. 1a shows two peers 12a and 12b, configured to operate in a HUB mode or in a client mode, wherein a peer is a device or an apparatus with a wireless interface for connecting to a network or for wirelessly exchange data, e.g. a laptop, a smartphone or a desktop computer. The HUB mode comprises a maintenance of a network and/or functionality of an access point, wherein the access point is configured to interconnect one or more peers in client mode if they are within a transmission range of the peer operating in HUB mode. Peers operating in the client mode are configured to establish a network connection with a peer operating in the HUB mode, to use peers operating in the HUB mode as access point, e.g. for obtaining access to further services like accessing the Internet or to exchange data with other clients while being a client. Peer 12a is operating in the HUB mode as indicated by the "H" inside the peer, wherein peer 12b is operating in the client mode as indicated by the "C" inside the peer. Both peers 12a and 12b are located with a too far distance between each other, so that peer 12a is out of range for being recognized by peer 12b. The peers 12a and 12b are configured to recognize another peer 12a or 12b by receiving a message from the other peer 12a or 12c, which enables a receiving peer 12a or 12c to identify and therefore recognize a sending peer 12a or 12c. Such a message may include an identifier of the peer 12a operating in the HUB mode, an identifier of the wireless network maintained by the peer 12a and/or an identifier of a peer 12b. As peer 12b is unable to recognize any peer operating in the HUB mode, it switches to HUB mode on its own to access data sources, e.g. the Internet, and to enable other peers within range to connect to itself and to establish a network.

Fig. 1b shows peers 12a and 12b, both operating in the HUB mode, and a third peer 12c in client mode as indicated by the "C". Peer 12c is located between the peers 12a and 12b and within the transmission range of both peers 12a and 12b, both operating in the HUB mode. After peer 12c has recognized peer 12a and peer 12b as possible HUBs to form a network with and within transmission range, it starts to build up a network connection to peer 12b. During establishing the network connection, both peers 12b and 12c follow a handshake procedure which includes transmitting at least one parameter which comprises the number of particular peers within range and therefore the number of recognized peers operating in the HUB mode and/or a number of connected peer operating in the client mode. Peer 12c transmits that no peers operating in the client mode are connected to it. As peer 12c has a second peer 12a operating in the HUB mode within transmission range it forwards this information to peer 12b, whereupon peers 12b and 12c swap roles which leads peer 12c to operate in the HUB mode and peer 12b to operate in the client mode.

The at least one parameter sent can further comprise other relevant data for maintaining the wireless network, e.g. a status of a battery of the particular peer or an user command and therefore a non-technical information which, for example, comprises a wish of the user to operate a particular peer in the HUB mode..

Fig. 1c shows the peers 12b and 12c with swapped roles and an established network connection between the peers, wherein peer 12b operates in the client mode and peer 12c operates in the HUB mode. As no peer in client mode has connected to peer 12a while operating in the HUB mode, peer 12a switches to client mode and scans for an available peer operating in the HUB mode, which it recognizes in peer 12c. Peer 12a starts a handshake procedure with peer 12c to establish a network connection between the peers 12a and 12c.

In alternative embodiments, peer 12c starts a negotiation with peer 12a after finishing negotiations with peer 12b as it has knowledge about peer 12b, and then sets up for HUB mode. In contrast to an interval-based check which is done by peer 12a in terms of switching from the HUB mode to the client mode after a certain time during which no other peer in the client mode connected to peer 12b, this embodiment enables peers 12a and 12b to communicate earlier instead of relying on the interval-based check. Depending on an aimed specific application, e.g. a fast generation of networks in a case of a disaster or a connecting of peers in terms of entertainment in a private environment, and depending on the application developers both options are feasible by the mechanism of the method.

While operating in the HUB mode, a first peer may be able to recognize a second peer operating in the HUB mode by receiving a message. Either the first peer receives a message that is directly sent by the second peer, for example if the first peer listens to beacons that the second peer broadcasts on a different channel, or by a third peer in client mode that is connected to the first peer, but has recognized the second peer as a HUB by scanning the environment for other peers in HUB mode despite being already connected to a peer in HUB mode. By evaluating the at least one parameter received with the received message, the receiving peer may be able to derive actions, i.e. a swap to the client mode to enable a merge of networks by associating to the sending peer afterwards. Peers comprising one wireless network interface may be configured to interact with other peers operating in the HUB mode while operating in the HUB mode itself. Alternatively or in addition, peers may comprise more than one wireless network interface to enable communication to other peers operating in the HUB mode.

Fig. 1d shows a final state of the organized network with the peers 12a and 12b both operating in the client mode and connected to peer 12c operating in the HUB mode and providing the functionality of an access point for the network.

In addition to a swap of roles in Figs. 1b and 1c, the dynamic organization or reorganization of the wireless network leads to a bridging of a lack of range between the peers 12a and 12b, shown in Fig. 1a, wherein peers 12a and 12b were unable to detect each other due to a too far distance in between the two peers. The peer 12c bridges this lack of range between the peers 12a and 12b. Simultaneously, the reorganization of the wireless network leads to an optimal energy consumption of the whole network, as the three peers 12a-c organize themselves in a way with only one access point supplying all peers with external data.

This optimized organization is able to be realized as the peers send their at least one parameter comprising a connectivity parameter and inform each other about their capabilities of acting within the wireless network, for example a peer with an almost empty battery is not selected to operate in the HUB mode and to interconnect other peers operating in the client mode, as this leads to increased energy consumption and a shortened operation time. In this example another peer with greater energy resources is going to operate in the HUB mode.

In alternative embodiments, the at least one parameter comprises capabilities of a particular wireless interface of a particular peer in addition to the battery status. With this information, amongst a peer to operate in HUB mode is able be selected amongst a plurality of peers according to the capability of downloading data from the Internet and distributing it in the wireless network in terms of a download rate.

In further embodiments the parameter comprises an information provided by an user of the peer 12c to select to operate the peer 12c in the HUB mode.

The peers can be mobile or immobile devices communicating wirelessly as stated above, wherein the above described procedure can be implemented on such devices using existing hardware by programming the peers to use the above described procedure.

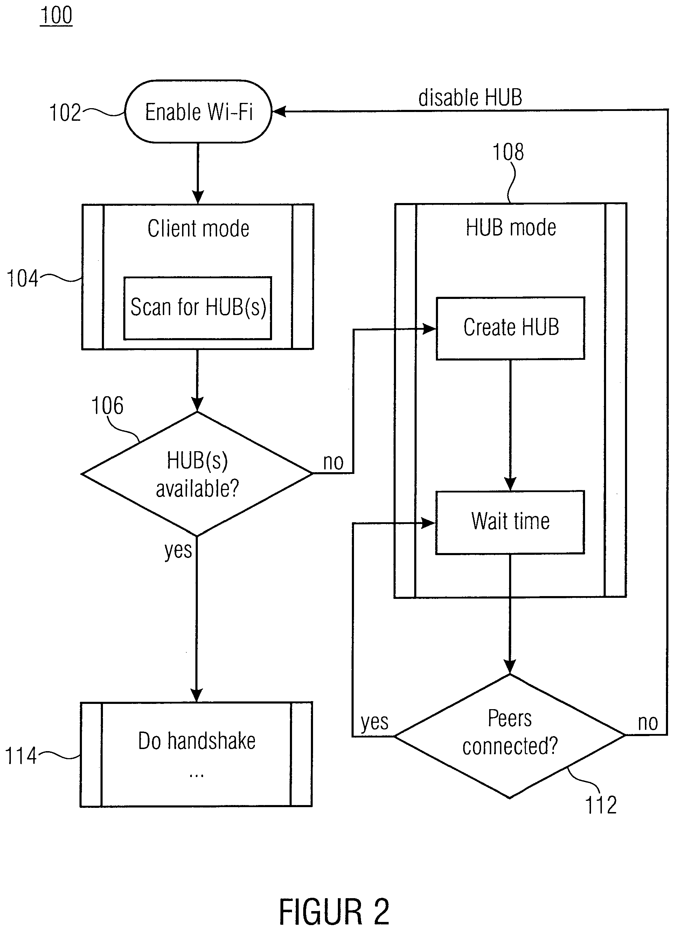

Fig. 2 shows a flowchart depicting possible states of a peer, configured to operate in the HUB mode or in the client mode. In an initial state 102, a peer heading to be integrated into a network or building up a network, enables its Wi-Fi interface and switches to a state 104, wherein the peer is in client mode and scans for available HUBs within transmission range. If a condition 106 results in no peers operating in the HUB mode, HUBs respectively, to be available, the peer switches into the HUB mode 108 to enable other peers establishing a connection to the peer switched to the HUB mode 108. After a certain time, a result of a condition 112 defines further processing. In case other peers established and still maintain a connection to the peer in the HUB mode, the peer waits another time interval. In case no peer has established a connection to the peer, it disables its HUB mode and returns to the initial state 102 with an enabled Wi-Fi interface to proceed operating in the client mode 104. In case the condition 106 results in at least one HUB available within transmission range, a handshake procedure 114 is started, wherein the peer is still operating in the client mode.

As a result, a new peer, e.g. a peer that has just arrived within a new location or was just powered up, first starts to scan for existing network structures and then tries to join these structures. Only in case no existing structures are found, a new HUB is set up and therefore a new access point is created. With this procedure, energy which is required for building up an access point is saved, the energy required for access points within a network is minimized respectively as the preferred option is to connect to a HUB instead of setting up a new one. As shown before, the new peer is also configured to act as new HUB, wherein the previous HUB switches to the client mode.

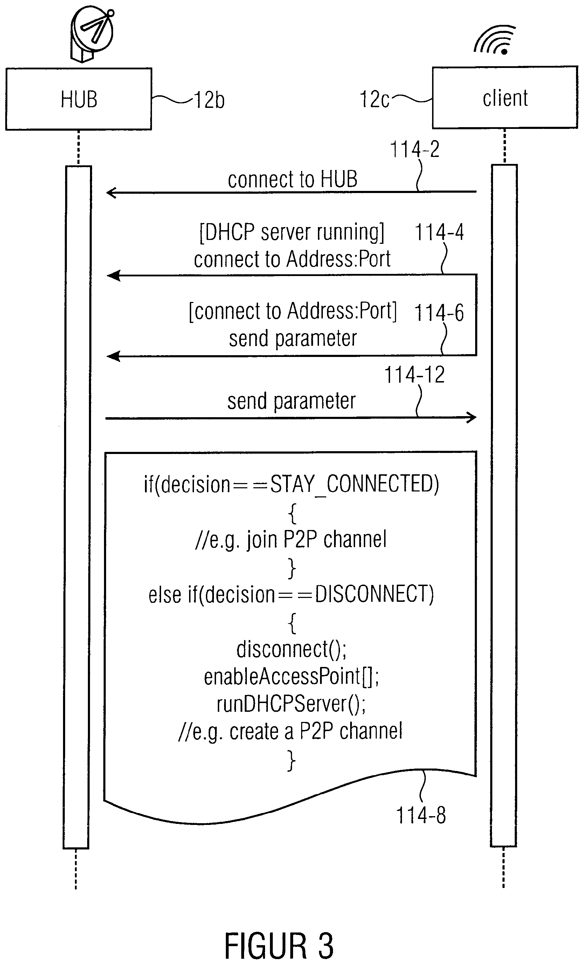

Fig. 3 shows a sequence diagram of the handshake procedure 114 shown in Fig. 2. In a first step 114-2 the peer 12c connects to peer 12b operating in the HUB mode, accessing the Wi-Fi network. At this time, peer 12c is part of the network of peer 12b. In a second step 114-4 the peer 12c obtains an IP address from the peer 12b, using a scheme defined the peer 12b, e.g. using DHCP and connects to a predefined default IP address port. In a third step 114-6 the peer 12c sends its at least one parameter to the peer 12b using the IP connection and a specific protocol, whereas the at least one parameter can comprise a connectivity parameter, e.g. a battery status, a number of connected clients or a latest account of recognized HUBs. The peer 12c sends for identification purposes its unique identifier, e.g. a Media Access Control (MAC) address. With a defined procedure 114-8, the peer 12b compares the received connectivity parameters from the peer 12c to its own and replies in a step 114-12 to peer 12c through the established IP connection whether it remains as a HUB or it passes the role to peer 12c. If it remains as a HUB, the process finishes with the peer 12c remaining associated to the Wi-Fi network. If peer 12b passes the role of the HUB to peer 12c, both peers swap roles as described later on. For explanation purposes, in its reply to peer 12c, the peer 12b sends its at least one parameter, comprising remaining battery and a number of connected clients. The peer 12b stores the received information internally, wherein the stored information expires after a certain time, as a network structure might have changed dynamically.

In alternative embodiments, the peer operating in HUB mode transmits the positive role swap decision, to the peer operating in the client mode in case it passes the role of the HUB to the peer. In case of a negative role swap decision, it sends no message including the negative role swap decision, wherein the peer receiving no such message stays operating in the client mode.

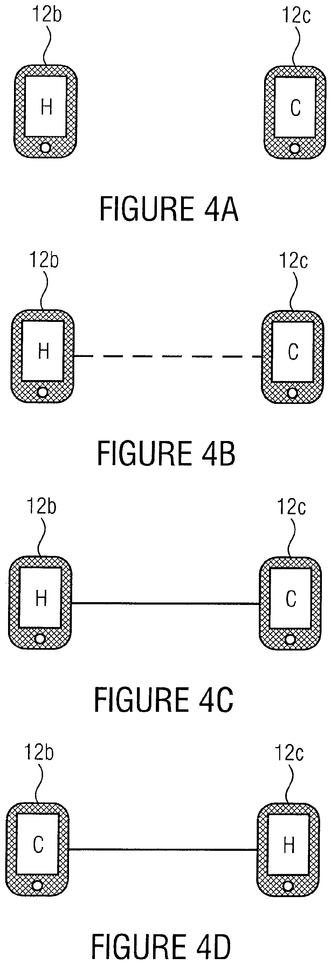

Fig. 4 shows a procedure of creating a network according to method 100 including a swap of roles. In an initial state, shown in Fig. 4a, a peer 12b in HUB mode and a peer 12c in client mode are operational.

Fig. 4b shows peers 12b and 12c performing the handshake procedure.

Fig. 4c shows peer 12b operating in the HUB mode and peer 12c operating in the client mode with an established network connection and therefore forming a network.

Fig. 4d shows peer 12b and peer 12c forming a network with swapped roles, peer 12b operating in the client mode and peer 12c operating in the HUB mode. The swap of roles comprises the peer 12c, in Fig. 4c operating in the client mode, to disconnect from the peer 12b in HUB mode and to proceed with a HUB setup to establish a network. The peer 12b operating in the HUB mode closes its HUB, i.e. DHCP server and access point. The peer 12b then switches to client mode and scans for a while until it finds the peer 12c which switched to HUB mode. Peer 12b connects to the HUB performed by peer 12c. If peer 12b finds in its internal storage the unique identifier, exchanged during sending/receiving the at least one parameter, of the peer 12c, the peer 12b will just associate to the peer 12c, operating the HUB. If the peer 12b finds a different HUB that does not represent peer 12c, the handshaking process starts again.

In alternative embodiments, a peer initially operating in the HUB mode and swapping roles directly accesses the peer switched to the HUB mode due to the swap of roles without scanning as the peer initially operating in the HUB mode selected the particular peer switching to HUB mode to do so and therefore has knowledge about the new HUB to address it directly.

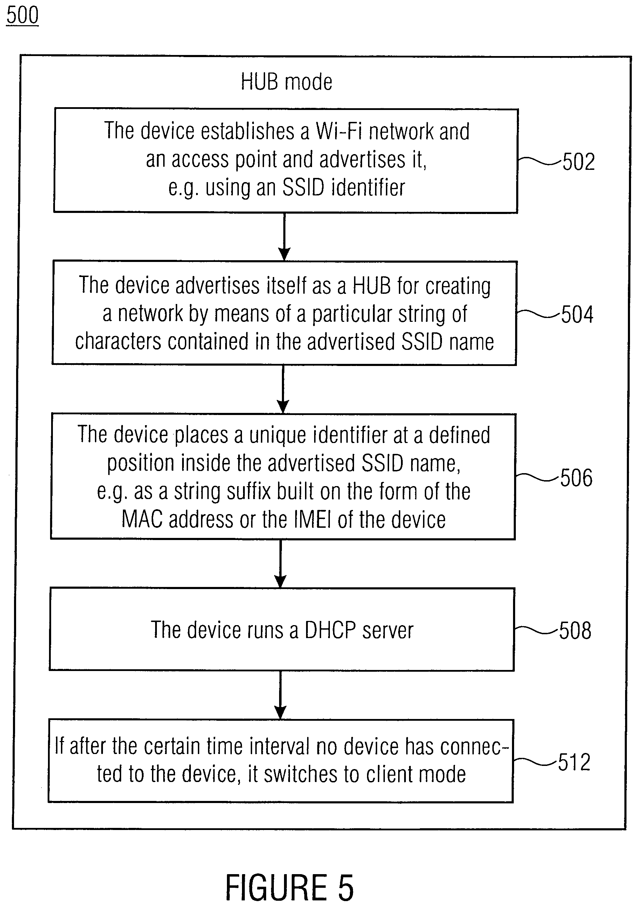

Fig. 5 shows a flowchart of steps comprised by the HUB mode 500. In a first step 502, the device establishes a Wi-Fi network and an access point and advertises it, e.g. using an SSID identifier. In a second step 504 the device advertises itself as a HUB for creating a network by means of a particular string of characters contained in the advertised SSID name. In a third step 506, the device places a unique identifier at a defined position inside the advertised SSID name, e.g. as a string suffix built on the form of the MAC addressor the IMEI of the device. In a fourth step 508, the device runs a DHCP server. In a fifth step 512, the device waits for a certain time interval operating in the HUB mode and if after the certain time interval no device has connected to the device, it switches to client mode as shown in Fig. 2.

Alternatively or in addition, other identifiers may be used for advertising a network or an access point besides the SSID, e.g. the BSSID.

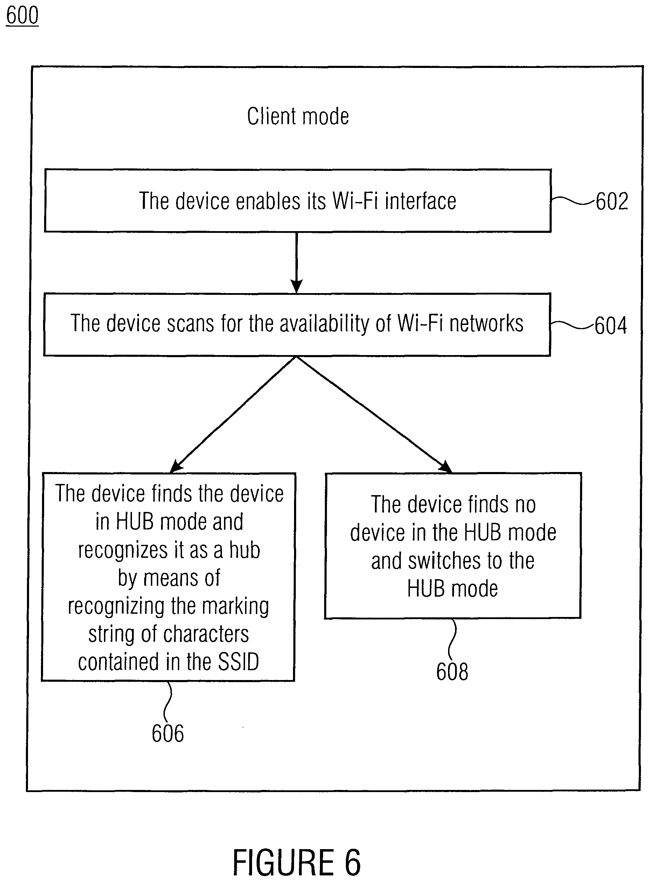

Fig. 6 shows a flowchart of steps comprised by the client mode 600. In a first step 602, the device enables its Wi-Fi interface. In a second step 604, the device scans for the availability of Wi-Fi networks within its transmission range, available HUBs respectively. In a third step 606, the device finds the device in HUB mode and recognizes it as a HUB by means of recognizing the marking string of characters contained in the SSID. In a fourth step 608, if step 606 does not occur, i.e. the device does not recognize a device in the HUB mode, the device switches into the HUB mode as shown in Fig. 2.

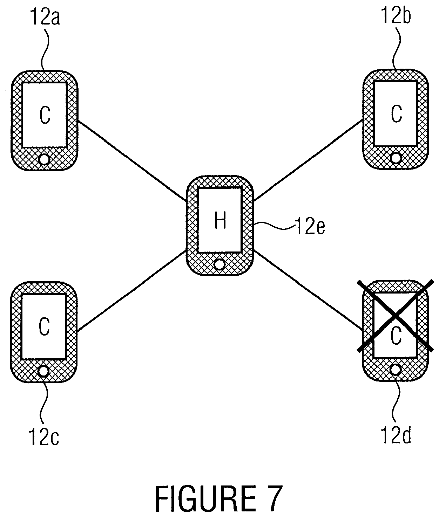

Fig. 7 shows a diagram of a network consisting of five peers 12a-e, the peer 12e operating in the HUB mode and the peers 12a-d operating in the client mode and being associated with the peer 12e. A disruption of client 12d leads to a reduced network size, as one peer is leaving the network but the remaining network is still operational as the peers 12a-c are still associated with the peer 12e. The peer 12d is able to rejoin a previously joined wireless ad hoc network after the peer 12d got disrupted, as it simply starts in the client mode and detects peer 12e being a HUB with associated peers 12a-c in the client mode and therefore it associates with the HUB 12e.

Therefore, a re-joining of a peer operating in the client mode into the network is simple and enables other peers to keep their network connection operational without forming a new network.

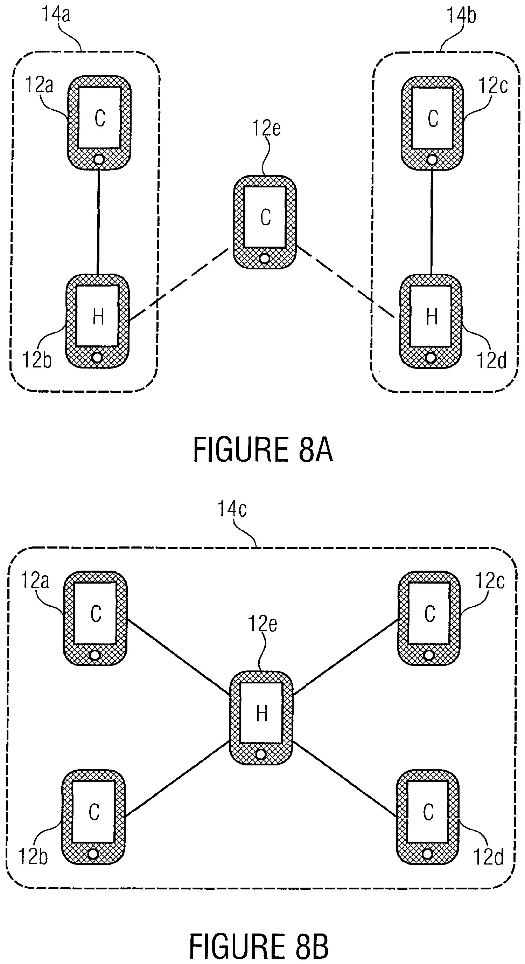

Fig. 8a shows two networks 14a and 14b consisting of two peers 12a and 12b, 12c and 12d respectively, wherein peers 12b and 12d are operating in the HUB mode and 12a and 12c are operating in the client mode. Peers of different networks 14a and 14b are out of range to recognize each other. The peer 12e in client mode recognizes both HUBs 12b and 12d and the peers in client mode 12a and 12c and therefore recognizes four peers 12a-d in sum, whereas the other peers 12a-d recognize two other peers 12a-e each, namely the respectively other peer 12a-d within the respectively network 14a or 14b and peer 12e. Peer 12e starts associating to both HUBs, one at a time as shown in Fig. 1.

Fig. 8b shows a structure of a network 14c after the reorganization and the swap of roles. Due to peer 12e having recognized the highest number of peers within transmission range, it is selected to operate in HUB mode. As the former HUBs 12b and 12d closed all their connections and switched to client mode after communicating to peer 12e to swap to HUB mode, also the peers 12a and 12c, each in client mode, recognize peer 12e operating in the HUB mode as a HUB with two clients connected and therefore also connects to peer 12e. It can be seen that peers 12a-e therefore form a wireless network 14c which merges the wireless networks 14a and 14b shown in Fig. 8a and further comprises peer 12e, the wireless network 14c operating only one peer in the HUB mode.

The capability of a dynamic reorganization of network structures allows peers to organize themselves in a desired way. As shown in Fig. 8b, only one HUB is used as an access point for the sum of five peers, wherein in Fig. 8a the five peers formed two access points, which results in a higher consumption of energy, for example. Besides that, in Fig. 8a the peers can only provide services inside their network preventing to provide a common ground of services as shown in Fig. 8b.

In alternative embodiments, the level of remaining battery of each peer is considered to select the peer to operate in the HUB mode.

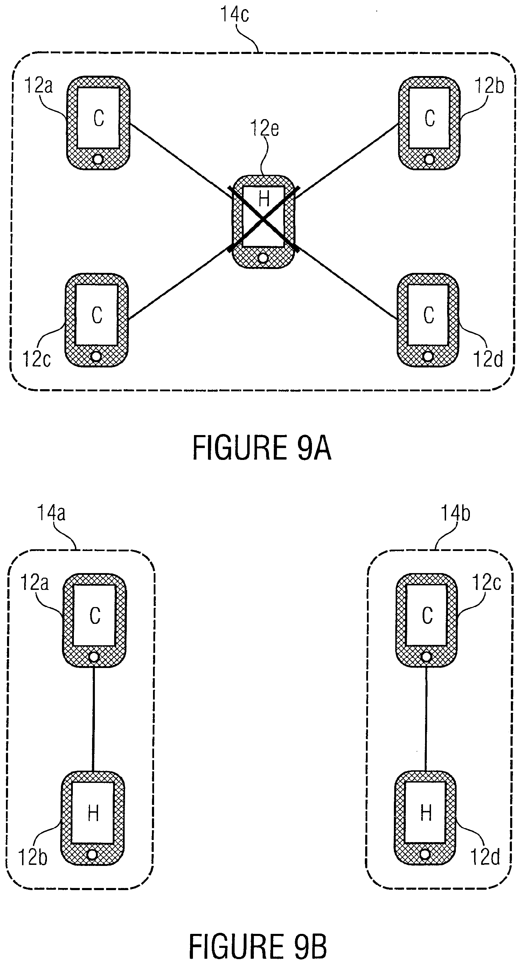

Fig. 9a shows network 14c of Fig. 8b, wherein the HUB 12e gets disrupted and fails to interconnect the peers 12a-d. Fig. 9b shows the remaining peers 12a-d after a reorganization of the network structure. After the peers 12a-d lost connection to the HUB, they start to renegotiate the formation of an alternative wireless ad hoc network. Peers 12a and 12b are in range of each other and peers 12c and 12d are in range of each other, so that a distance between the peers 12a and 12b to the peers 12c and 12d leads to a lack of range and an unavailability of interconnection. Peer 12b switches to the HUB mode and peer 12a recognizes peer 12b operating in the HUB mode by method 100 and associates with it to form the network 14a. Simultaneously peer 12d switches to the HUB mode and peer 12c recognizes and associates with the peer 12d.

In alternative situations, the peer 12a and/or the peer 12c is negotiated as a HUB. Reasons for selecting the HUB can be the status of the battery, as operating in the HUB mode can lead to a higher energy consumption than operating in client mode, or the capability of accessing data from the Internet, e.g. the bitrate of the Wi-Fi interface.

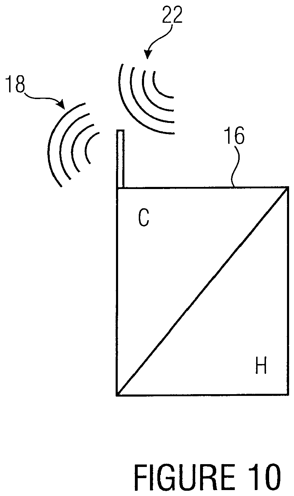

Fig. 10 shows a smartphone 16 programmed to operate in the client mode as a client or in the HUB mode as a HUB of a network, to send 18 at least one parameter, to receive 22 at least one parameter and to derive a positive or negative role swap decision dependent from the received at least one parameter.

The smartphone 16 is therefore able to dynamically swap roles within a network and therefore supports a dynamically reorganization of the network to obtain an optimal network structure. For example, with respect to energy consumption and the numbers of discovered HUBs or connected clients, the designation of suitable HUBs without requiring cumbersome manual actions.

The role swap decision is made according to the at least one parameter, for example to select the peer to operate in the HUB mode according to a highest battery level, a highest data rate, the smartphone model, the IMEI, the mobile operator of a peers or a highest CPU speed. Alternatively or in addition, the role swap decision can be made according to a combination of parameters, e.g. by weighting two or more parameters and make the role swap decision according to the sum of the weighted parameters.

A selection of the at least one parameter to be selected for making the role swap decision may depend on the specific application. In case of a disaster for example, an aim could be to interconnect and supply with data a highest number of peers with a minimum of peers operating in the HUB mode to save energy. Accordingly the parameter used for the role swap decision might be the number of other peers recognized by a peer, for minimizing the number of HUBs and the mobile operator of the peer for optimizing the data access for all peers. In other embodiments, the application aims for an interconnection of devices for entertainment purposes. Therefore the connectivity parameters are selected in a way, that peers which IMEI is known by other peers of preferably interconnect with each other while knowing a preferred peer to operate in the HUB mode, e.g. a home server. Such a preference may also be defined by an application running on the peer or an user of the peer, e.g. in terms of manually selecting the peer and provide this information within a message comprising the parameter. Also, for application scenarios in which a peer in HUB mode needs to handle a high amount of data traffics, and energy can be disregarded, e.g. due to the possibility of recharging or limited duration of a network, the peer with the strongest CPU but still acceptable battery level, e.g. 40% could operate in HUB mode.

The system allows a straightforward construction of ad hoc networks without cumbersome configuration efforts required from the side of the user. The approach combines existing technology, e.g. established protocols and standards, in an innovative way in order to provide a fast network configuration process, which also requires few computing resources.

The method is compatible with the use of standard established cryptographic protocols and therefore provides security. The method can be used in all domains that require the construction of ad hoc networks, for example business contexts, emergency responses, multiplayer gaming, co-located social networks.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Depending on certain implementation requirements, embodiments of the invention can be implemented in hardware or in software. The implementation can be performed using a digital storage medium, for example a floppy disk, a DVD, a CD, a ROM, a PROM, an EPROM, an EEPROM or a FLASH memory, having electronically readable control signals stored thereon, which cooperate (or are capable of cooperating) with a programmable computer system such that the respective method is performed.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

The research, which lead to this resource, was funded by the European Union.

## Claims

1. Method for organizing a wireless network having a first and a second peer (12a-e) configured to operate in a HUB mode or in a client mode, the HUB mode comprising a maintenance of the network and/or functionality of an access point configured to interconnect one or more peers in client mode if they are within a transmission range of the peer operating in HUB mode , the method comprising:
broadcasting a network identifier by the first peer to establish the wireless network in which the first peer (12a-e) operates in the HUB mode and the second peer operates in the client mode;
forming the wireless network in which the first peer operates in the HUB mode and the second peer operates in the client mode; and subsequently
receiving (22) at least one parameter of the second peer (12a-e) operating in the client mode by the first peer (12a-e) operating in the HUB mode;
making of a positive or negative role swap decision by the first peer (12a-e) dependent on the received at least one parameter;
swapping roles responsive to the positive role swap decision and forming a wireless network with swapped roles in which the first peer (12a-e) operates in the client mode and the second peer (12a-e) operates in the HUB mode.

2. Method as claimed in claim 1, further comprising:
in case of a positive role swap decision transmitting the positive role swap decision to the second peer (12a-e); and
swapping roles of the first and second peer (12a-e), wherein the second peer (12a-e) swaps to the HUB mode and wherein the first peer (12a-e) swaps to the client mode.

3. Method as claimed in claim 1 or claim 2, wherein the network identifier comprises a string of characters, wherein the string of characters is based on an identifier of the first peer (12a-e) operating in the HUB mode.

4. Method as claimed in one of claims 1-3, wherein establishing the wireless network comprises:
at the first peer, receiving a connection request which is transmitted by the second peer (12a-e) in response to receiving the network identifier;
performing a handshake procedure (114) between the first peer (12a-e) and the second peer (12a-e).

5. Method as claimed in claim 4, wherein the at least one parameter is received from the second peer (12a-e) during the handshake procedure (114).

6. Method as claimed in one of claims 1-5, wherein the at least one parameters comprises at least one of a battery status of the second peer (12a-e), a number of peers (12a-e) recognized by the second peer (12a-e), an energy consumption of the second peer (12a-e), a smartphone model of the second peer (12a-e), a CPU model of the second peer (12a-e), an IMEI of the second peer (12a-e), a mobile operator of the second peer (12a-e), a data rate of a wireless interface of the second peer (12a-e), and an information provided by an application running on the second peer (12a-e) or an user of the second peer (12a-e).

7. Method as claimed in one of claims 1-6, wherein making the positive or negative role swap decision comprises comparing the at least one parameter of the second peer (12a-e) with at least one parameter of the first peer (12a-e).

8. Method as claimed in claim 7, wherein the at least one parameter of the first peer (12a-e) comprise at least one of a battery status of the first peer (12a-e) , a number of peers (12a-e) recognized by the first peer (12a-e), an energy consumption of the first peer (12a-e), a smartphone model of the first peer (12a-e), a CPU model of the first peer (12a-e), an IMEI of the first peer (12a-e), a mobile operator of the first peer (12a-e), a data rate of a wireless interface of the first peer (12a-e) and an information provided by an application running on the first peer (12a-e) or an user of the first peer (12a-e).

9. Method as claimed in one of claims 1-8, wherein the positive role swap decision is made if the at least one parameter of the second peer (12a-e) comprise a higher number of recognized peers (12a-e) than the first peer (12a-e).

10. Method as claimed in one of claims 1-9, wherein the positive role swap decision is made if the at least one parameter of the second peer (12a-e) comprise a higher level of remaining battery than the first peer (12a-e).

11. Method as claimed in one of the previous claims, wherein the method further comprises:
receiving the at least one parameter from a plurality of peers (12a-e) operating in the client mode including the second peer (12a-e);
wherein the positive or negative role swap decision is made based at least on the at least one parameter from the plurality of peers (12a-e); and
wherein a positive role swap decision comprises a selection of one of the plurality of peers (12a-e) to swap into the HUB mode.

12. Apparatus (16) for organizing a wireless network, wherein the apparatus is configured to operate in the wireless network in a client mode or in a HUB mode , the HUB mode comprising a maintenance of the network and/or functionality of an access point configured to interconnect one or more peers in client mode if they are within a transmission range of the peer operating in HUB mode, wherein the apparatus is further configured to:
form the wireless network in which the apparatus operates in the HUB mode and a peer of the one or more peers operates in the client mode; and subsequently
receive (22) at least one parameter from the peer (12a-e) in the wireless network which operates in the client mode;
make a positive or negative role swap decision dependent on the received at least one parameter;
swap roles responsive to the positive role swap decision and form a network with swapped roles in which the apparatus operates in the client mode and the peer (12a-e) operates in the HUB mode.

13. Apparatus (16) according to claim 12 which, when operating in the HUB mode is further configured to:
in case of a positive role swap decision, send the positive role swap decision to the peer (12a-e) of the wireless network, from which the at least one parameter was received and swap to the client mode; and
which when operating in the client mode is further configured to receive a positive role swap decision from a peer (12a-e) of the wireless network, which is operating in the HUB mode, and swap to the HUB mode.

14. Apparatus (16) according to claim 12 or claim 13, wherein the at least one parameter comprises at least one of a battery status of the peer (12a-e) operating in the client mode, a number of peers (12a-e) operating in the HUB mode recognized by the peer (12a-e) operating in the client mode, an energy consumption of the peer (12a-e) operating in the client mode, a smartphone model of the peer (12a-e) operating in the client mode, a CPU model of the peer (12a-e) operating in the client mode, an IMEI of the peer (12a-e) operating in the client mode, a mobile operator of the peer (12a-e) operating in the client mode, a data rate of a wireless interface of the peer (12a-e) operating in the client mode and an information provided by an application running on the peer (12a-e) operating in the client mode or an user of the peer (12a-e) operating in the client mode.

15. Computer program comprising program code operative to perform the steps of a method according to one of claims 1 to 11 when the computer program runs on a computer.

## Patentansprüche

1. Verfahren zum Organisieren eines Drahtlosnetzwerkes mit einem ersten und einem zweiten Partner (12a-e), dazu ausgebildet, in einem HUB-Modus oder in einem Client-Modus zu arbeiten, wobei der HUB-Modus eine Wartung des Netzwerkes und/oder eine Funktionalität eines Zugriffspunktes aufweist, dazu ausgebildet, einen oder mehrere Partner in dem Client-Modus zu verbinden, wenn sie in einem Übertragungsbereich des in dem HUB-Modus arbeitenden Partners sind, wobei das Verfahren folgende Schritte aufweist:
Senden eines Netzwerkidentifikators durch den ersten Partner, um das Drahtlosnetzwerk herzustellen, in dem der erste Partner (12a-e) in dem HUB-Modus arbeitet und der zweite Partner in dem Client-Modus arbeitet;
Bilden des Drahtlosnetzwerkes, in dem der erste Partner in dem HUB-Modus arbeitet und der zweite Partner in dem Client-Modus arbeitet; und daraufhin
Empfangen (22) zumindest eines Parameters des zweiten Partners (12a-e), der in dem Client-Modus arbeitet, durch den ersten Partner (12a-e), der in dem HUB-Modus arbeitet;
Treffen einer positiven oder einer negativen Rollenwechselentscheidung durch den ersten Partner (12a-e) in Abhängigkeit von dem empfangenen zumindest einen Parameter;
Wechseln der Rollen ansprechend auf die positive Rollenwechselentscheidung und Bilden eines Drahtlosnetzwerkes mit gewechselten Rollen, in dem der erste Partner (12a-e) in dem Client-Modus arbeitet und der zweite Partner (12a-e) in dem HUB-Modus arbeitet.

2. Verfahren gemäß Anspruch 1, das ferner folgende Schritte aufweist:
im Falle einer positiven Rollenwechselentscheidung, Übertragen der positiven Rollenwechselentscheidung an den zweiten Partner (12a-e); und
Wechseln der Rollen des ersten und des zweiten Partners (12a-e), wobei der zweite Partner (12a-e) in den HUB-Modus wechselt und wobei der erste Partner (12a-e) in den Client-Modus wechselt.

3. Verfahren gemäß Anspruch 1 oder 2, wobei der Netzwerkidentifikator eine Zeichenfolge aufweist, wobei die Zeichenfolge auf einem Identifikator des ersten Partners (12a-e), der in dem HUB-Modus arbeitet, basiert.

4. Verfahren gemäß einem der Ansprüche 1-3, wobei das Herstellen des Drahtlosnetzwerkes Folgendes aufweist:
an dem ersten Partner, Empfangen einer Verbindungsanforderung, die durch den zweiten Partner (12a-e) ansprechend auf das Empfangen des Netzwerkidentifikators übertragen wird;
Ausführen eines Handshake-Prozesses (114) zwischen dem ersten Partner (12a-e) und dem zweiten Partner (12a-e).

5. Verfahren gemäß Anspruch 4, wobei der zumindest eine Parameter während des Handshake-Prozesses (114) von dem zweiten Partner (12a-e) empfangen wird.

6. Verfahren gemäß einem der Ansprüche 1 bis 5, wobei der zumindest eine Parameter Folgendes aufweist: einen Batteriestatus des zweiten Partners (12a-e), eine Anzahl von Partnern (12a-e), die von dem zweiten Partner (12a-e) erkannt werden, einen Energieverbrauch des zweiten Partners (12a-e), ein Smartphone-Modell des zweiten Partners (12a-e), ein CPU-Modell des zweiten Partners (12a-e), eine IMEI des zweiten Partners (12a-e), einen Mobilfunkbetreiber des zweiten Partners (12a-e), eine Datenrate einer Drahtlosschnittstelle des zweiten Partners (12a-e) und/oder eine Information, die durch eine Anwendung, welche auf dem zweiten Partner (12a-e) abläuft, oder einen Benutzer des zweiten Partners (12a-e) bereitgestellt wird.

7. Verfahren gemäß einem der Ansprüche 1 bis 6, wobei das Treffen der positiven oder negativen Rollenwechselentscheidung ein Vergleichen des zumindest einen Parameters des zweiten Partners (12a-e) mit zumindest einem Parameter des ersten Partners (12a-e) aufweist.

8. Verfahren gemäß Anspruch 7, wobei der zumindest eine Parameter des ersten Partners (12a-e) Folgendes aufweist: einen Batteriestatus des ersten Partners (12a-e), eine Anzahl an Partnern (12a-e), die von dem ersten Partner (12a-e) erkannt werden, einen Energieverbrauch des ersten Partners (12a-e), ein Smartphone-Modell des ersten Partners (12a-e), ein CPU-Modell des ersten Partners (12a-e), eine IMEI des ersten Partners (12a-e), einen Mobilfunkbetreiber des ersten Partners (12a-e), eine Datenrate einer Drahtlosschnittstelle des ersten Partners (12a-e) und/oder eine Information, die durch eine Anwendung, die auf dem ersten Partner (12a-e) abläuft, oder einem Benutzer des ersten Partners (12a-e) bereitgestellt wird.

9. Verfahren gemäß einem der Ansprüche 1 bis 8, wobei die positive Rollenwechselentscheidung getroffen wird, falls der zumindest eine Parameter des zweiten Partners (12a-e) eine höhere Anzahl an erkannten Partnern (12a-e) aufweist als der erste Partner (12a-e).

10. Verfahren gemäß einem der Ansprüche 1 bis 9, wobei die positive Rollenwechselentscheidung getroffen wird, falls der zumindest eine Parameter des zweiten Partners (12a-e) einen höheren Pegel an verbleibender Batterie aufweist als der erste Partner (12a-e).

11. Verfahren gemäß einem der vorhergehenden Ansprüche, wobei das Verfahren ferner folgende Schritte aufweist:
Empfangen des zumindest einen Parameters von einer Mehrzahl von Partnern (12a-e), die in dem Client-Mode arbeiten, einschließlich des zweiten Partners (12a-e);
wobei die positive oder negative Rollenwechselentscheidung auf der Basis zumindest des zumindest einen Parameters von der Mehrzahl von Partnern (12a-e) getroffen wird; und
wobei eine positive Rollenwechselentscheidung eine Auswahl eines der Mehrzahl von Partnern (12a-e) dahingehend, in den HUB-Modus zu wechseln, aufweist.

12. Vorrichtung (16) zum Organisieren eines Drahtlosnetzwerkes, wobei die Vorrichtung dazu ausgebildet ist, in dem Drahtlosnetzwerk in einem Client-Modus oder in einem HUB-Modus zu arbeiten, wobei der HUB-Modus eine Wartung des Netzwerkes und/oder eine Funktionalität eines Zugriffpunktes aufweist, dazu ausgebildet, einen oder mehrere Partner in dem Client-Mode zu verbinden, wenn sie in einem Übertragungsbereich des in dem HUB-Modus arbeitenden Partners sind, wobei die Vorrichtung ferner dazu ausgebildet ist:
das Drahtlosnetzwerk, in dem die Vorrichtung in dem HUB-Modus arbeitet und ein Partner des einen oder der mehreren Partner in dem Client-Modus arbeitet, zu bilden; und daraufhin
zumindest einen Parameter von dem Partner (12a-e) in dem Drahtlosnetzwerk zu empfangen (22), der in dem Client-Modus arbeitet;
eine positive oder negative Rollenwechselentscheidung in Abhängigkeit des empfangenen zumindest einen Parameters zu treffen;
ansprechend auf die positive Rollenwechselentscheidung Rollen zu wechseln und ein Netzwerk mit gewechselten Rollen zu bilden, in dem die Vorrichtung in dem Client-Modus arbeitet und der Partner (12a-e) in dem HUB-Modus arbeitet.

13. Vorrichtung (16) gemäß Anspruch 12, die dann, wenn diese in dem HUB-Modus arbeitet, ferner dazu ausgebildet ist:
im Falle einer positiven Rollenwechselentscheidung die positive Rollenwechselentscheidung an den Partner (12a-e) des Drahtlosnetzwerkes, von dem der zumindest eine Parameter empfangen wurde, zu senden und in den Client-Modus zu wechseln; und
die dann, wenn diese in dem Client-Modus arbeitet, ferner dazu ausgebildet ist, eine positive Rollenwechselentscheidung von einem Partner (12a-e) des Drahtlosnetzwerkes, der in dem HUB-Modus arbeitet, zu empfangen und in den HUB-Modus zu wechseln.

14. Vorrichtung (16) gemäß Anspruch 12 oder 13, wobei der zumindest eine Parameter Folgendes aufweist: einen Batteriestatus des Partners (12a-e), der in dem Client-Modus arbeitet, eine Anzahl von Partnern (12a-e), die in dem Hub-Modus arbeiten, die von dem Partner (12a-e), der in dem Client-Modus arbeitet, erkannt werden, einen Energieverbrauch des Partners (12a-e), der in dem Client-Modus arbeitet, ein Smartphone-Modell des Partners (12a-e), der in dem Client-Modus arbeitet, ein CPU-Modell des Partners (12a-e), der in dem Client-Modus arbeitet, eine IMEI des Partners (12a-e), der in dem Client-Modus arbeitet, einen Mobilfunkbetreiber des Partners (12a-e), der in dem Client-Modus arbeitet, eine Datenrate einer Drahtlosschnittstelle des Partners (12a-e), der in dem Client-Modus arbeitet, und/oder eine Information, die durch eine Anwendung, welche auf dem Partner (12a-e), der in dem Client-Modus arbeitet, abläuft, oder einen Benutzer des Partners (12a-e), der in dem Client-Modus arbeitet, bereitgestellt wird.

15. Computerprogramm, das Programmcode aufweist, der dazu betriebsfähig ist, die Schritte eines Verfahrens gemäß einem der Ansprüche 1 bis 11 auszuführen, wenn das Computerprogramm auf einem Computer läuft.

## Revendications

1. Procédé d'organisation d'un réseau sans fil présentant un premier et un deuxième pair (12a-e) configurés pour fonctionner en un mode HUB ou en mode client, le mode HUB comprenant une maintenance du réseau et/ou une fonctionnalité d'un point d'accès configuré pour interconnecter un ou plusieurs pairs en mode client s'ils se trouvent dans une plage de transmission du pair fonctionnant en mode HUB, le procédé comprenant le fait de:
diffuser un identificateur de réseau par le premier pair pour établir le réseau sans fil dans lequel le premier pair (12a-e) fonctionne en mode HUB et le deuxième pair fonctionne en mode client;
former le réseau sans fil dans lequel le premier pair fonctionne en mode HUB et le deuxième pair fonctionne en mode client; et recevoir (22) ensuite au moins un paramètre du deuxième pair (12a-e) fonctionnant en mode client par le premier pair (12a-e) fonctionnant en mode HUB;
prendre une décision d'échange de rôle positive ou négative par le premier pair (12a-e) en fonction de l'au moins un paramètre reçu;
échanger les rôles en réponse à la décision d'échange de rôle positive et former un réseau sans fil avec les rôles échangés où le premier pair (12a-e) fonctionne en mode client et le deuxième pair (12a-e) fonctionne en mode HUB.

2. Procédé selon la revendication 1, comprenant par ailleurs le fait de:
en cas d'une décision d'échange de rôles positive, transmettre la décision d'échange de rôles positive au deuxième pair (12a-e); et
échanger les rôles des premier et deuxième pairs (12a-e), où le deuxième pair (12a-e) passe au mode HUB et où le premier pair (12a-e) passe au mode client.

3. Procédé selon la revendication 1 ou la revendication 2, dans lequel l'identificateur de réseau comprend une chaîne de caractères, dans lequel la chaîne de caractères est basée sur un identificateur du premier pair (12a-e) fonctionnant en mode HUB.

4. Procédé selon l'une des revendications 1 à 3, dans lequel l'établissement du réseau sans fil comprend le fait de:
au premier pair, recevoir une demande de connexion qui est transmise par le deuxième pair (12a-e) en réponse à la réception de l'identificateur de réseau;
effectuer une procédure de prise de contact (114) entre le premier pair (12a-e) et le deuxième pair (12a-e).

5. Procédé selon la revendication 4, dans lequel l'au moins un paramètre est reçu du deuxième pair (12a-e) pendant la procédure de prise de contact (114).

6. Procédé selon l'une des revendications 1 à 5, dans lequel l'au moins un paramètre comprend au moins l'un parmi un état de batterie du deuxième pair (12a-e), un nombre de pairs (12a-e) reconnus par le deuxième pair (12a-e), une consommation d'énergie du deuxième pair (12a-e), un modèle de téléphone intelligent du deuxième pair (12a-e), un modèle de CPU du deuxième pair (12a-e), un IMEI du deuxième pair (12a-e), un opérateur mobile du deuxième pair (12a-e), un débit de données d'une interface sans fil du deuxième pair (12a-e), et une information fournie par une application qui est exécutée sur le deuxième pair (12a-e) ou un utilisateur du deuxième pair (12a-e).

7. Procédé selon l'une des revendications 1 à 6, dans lequel la prise de la décision d'échange de rôle positive ou négative comprend le fait de comparer au moins un paramètre du deuxième pair (12a-e) avec au moins un paramètre du premier pair (12a-e).

8. Procédé selon la revendication 7, dans lequel l'au moins un paramètre du premier pair (12a-e) comprend au moins l'un parmi un état de batterie du premier pair (12a-e), un nombre de pairs (12a-e) reconnus par le premier pair (12a-e), une consommation d'énergie du premier pair (12a-e), un modèle de téléphone intelligent du premier pair (12a-e), un modèle de CPU du premier pair (12a-e), un IMEI du premier pair (12a-e), un opérateur mobile du premier pair (12a-e), un débit de données d'une interface sans fil du premier pair (12a-e) et une information fournie par une application qui est exécutée sur le premier pair (12a-e) ou un utilisateur du premier pair (12a-e).

9. Procédé selon l'une des revendications 1 à 8, dans lequel la décision d'échange de rôle positive est prise si l'au moins un paramètre du deuxième pair (12a-e) comprend un nombre supérieur de pairs reconnus (12a-e) que le premier pair (12a-e).

10. Procédé selon l'une des revendications 1 à 9, dans lequel la décision d'échange de rôle positive est prise si l'au moins un paramètre du deuxième pair (12a-e) comprend un niveau de batterie restant plus élevé que le premier pair (12a-e).

11. Procédé selon l'une des revendications précédentes, dans lequel le procédé comprend par ailleurs le fait de:
recevoir l'au moins un paramètre d'une pluralité de pairs (12a-e) fonctionnant en mode client, y compris le deuxième pair (12a-e);
dans lequel la décision d'échange de rôle positive ou négative est prise sur base au moins de l'au moins un paramètre de la pluralité de pairs (12a-e); et
dans lequel une décision d'échange de rôle positive comprend une sélection de l'un de la pluralité de pairs (12a-e) à passer au mode HUB.

12. Appareil (16) pour organiser un réseau sans fil, dans lequel l'appareil est configuré pour fonctionner dans le réseau sans fil en mode client ou en mode HUB, le mode HUB comprenant une maintenance du réseau et/ou une fonctionnalité d'un point d'accès configuré pour interconnecter un ou plusieurs pairs en mode client s'ils se trouvent dans une plage de transmission du pair fonctionnant en mode HUB, dans lequel l'appareil est par ailleurs configuré pour:
former le réseau sans fil dans lequel l'appareil fonctionne en mode HUB et un pair parmi les un ou plusieurs pairs fonctionne en mode client; et recevoir (22) ensuite au moins un paramètre du pair (12a-e) dans le réseau sans fil qui fonctionne en mode client;
prendre une décision d'échange de rôle positive ou négative en fonction de l'au moins un paramètre reçu;
échanger les rôles en réponse à la décision d'échange de rôle positive et former un réseau sans fil avec les rôles échangés où l'appareil fonctionne en mode client et le pair (12a-e) fonctionne en mode HUB.

13. Appareil (16) selon la revendication 12 qui, lorsqu'il fonctionne en mode HUB, est par ailleurs configuré pour:
en cas de décision d'échange de rôle positive, envoyer la décision d'échange de rôle positive au pair (12a-e) du réseau sans fil duquel a été reçu l'au moins un paramètre et passer au mode client; et
qui, lorsqu'il fonctionne en mode client, est par ailleurs configuré pour recevoir une décision d'échange de rôle positive d'un pair (12a-e) du réseau sans fil qui fonctionne en mode HUB, et passer en mode HUB.

14. Appareil (16) selon la revendication 12 ou la revendication 13, dans lequel l'au moins un paramètre comprend au moins l'un parmi un état de batterie du pair (12a-e) fonctionnant en mode client, un nombre de pairs (12a-e) fonctionnant en mode HUB reconnus par le pair (12a-e) fonctionnant en mode client, une consommation d'énergie du pair (12a-e) fonctionnant en mode client, un modèle de téléphone intelligent du pair (12a-e) fonctionnant en mode client, un modèle CPU du pair (12a-e) fonctionnant en mode client, un IMEI du pair (12a-e) fonctionnant en mode client, un opérateur mobile du pair (12a-e) fonctionnant en mode client, un débit de données d'une interface sans fil du pair (12a-e) fonctionnant en mode client et une information fournie par une application qui est exécutée sur le pair (12a-e) fonctionnant en mode client ou un utilisateur du pair (12a-e) fonctionnant en mode client.

15. Programme d'ordinateur comprenant un code de programme opérationnel pour réaliser les étapes d'un procédé selon l'une des revendications 1 à 11 lorsque le programme d'ordinateur est exécuté sur un ordinateur.
